# EUROPEAN PATENT SPECIFICATION

(11) **EP 1 873 050 B1**
(45) Date of publication and mention of the grant of the patent: **18.11.2009**
(21) Application number: 07111656.0
(22) Date of filing: 27.06.2007
(51) Int. Cl.: B62M 7/12, F02B 61/02

(54) **Scooter-type motorcycle**
Scooterähnliches Motorrad
Motocyclette de type scooter

(30) Priority: 21.07.2006 JP 2006198928; 27.06.2006 JP 2006176442
(43) Date of publication of application: 02.01.2008
(73) Proprietor: HONDA MOTOR CO., LTD., Tokyo 107-8556 (JP)
(72) Inventor: Takaishi, Yusuke, Saitama 351-0193 (JP); Honda, Koichiro, Saitama 351-0193 (JP); Kikuno, Junji, Saitama 351-0193 (JP); Watanabe, Satoru, Saitama 351-0193 (JP)
(74) Representative: Rupp, Christian

(56) References cited:
- EP-A- 1 304 544
- EP-A1- 0 462 615
- EP-A1- 1 593 836
- EP-A2- 1 170 475
- EP-A2- 1 369 560
- JP-A- 2002 235 535
- US-A1- 2004 231 899
- US-A1- 2005 082 101

## Description

The present invention relates to a scooter-type motorcycle in which a power unit composed of an engine with a cylinder axis line of an engine main body tilted forward, and a transmission for transmitting an output of the engine to a rear wheel is swingably supported by a body frame, the rear wheel is journalled to a rear part of a transmission case continuing to the engine main body and extending backward to a side of the rear wheel for housing the transmission, and a downstream end of intake passage forming means with an upstream end connected to an air cleaner disposed on an upper part of the transmission case is connected to an upper side face of a cylinder head composing a part of the engine main body.

An example of this scooter-type motorcycle is disclosed in Patent Document JP 2002-235535 A. In the scooter-type motorcycle, a secondary air control valve for controlling the quantity of secondary air supplied from a sub-air cleaner different from an air cleaner of an intake system to an exhaust system of an engine is disposed on a side of the intake system so as to be positioned on an upper part of the intake system in side view.

However, when the secondary air control valve is relatively separated from the engine, the length of a secondary air supply passage from the secondary air control valve to the exhaust system of the engine is increased, and piping arrangement structure becomes complicated. Also, since a power unit is swingablly supported by a body frame, when the secondary air control valve is supported on a body frame side, it is necessary to sufficiently ensure a clearance, for allowing the swing motion, of piping for interconnecting the secondary air control valve and the power unit. For this reason, the secondary air control valve is preferably disposed as close to the engine as possible.

Moreover, in a transmission system of the power unit mounted in the motorcycle, an endless belt or a chain is wound between a driving shaft rotated by the power of the internal combustion engine and a driven shaft interlocked with a rear wheel, the power of the internal combustion engine is transmitted to the rear wheel, and the motorcycle is driven.
The transmission system is housed in the transmission case.

The transmission case of this type of power unit is extended backward with the transmission case normally biased on the left side of the internal combustion engine and the transmission case long longitudinally is divided sideways.
In a patent document JP 2005-273763 A, a transmission case having such structure is disclosed, the disclosed transmission case is provided with mutually opposite joined faces at peripheral edges of right and left transmission cases divided sideways, the joined faces are touched, are fastened by bolts, and the transmission case houses a transmission system inside.

In the transmission case disclosed in the patent document JP 2005-273763 A, the left transmission case located on the outside of the body journals a left end of a driven shaft via a bearing.
Therefore, a bearing concave portion is formed in the left transmission case to fit an outer ring of the bearing.

In the left transmission case, the bearing concave portion is fitted to the outer ring of the bearing an inner ring of which is fitted onto the left end of the driven shaft, the joined face of the peripheral edge is joined to the joined face of the peripheral edge of the right transmission case so that the transmission system arranged inside the left side of the right transmission case is covered, the left transmission case is fastened to the right transmission case by the bolt, and is attached to the right case.

As the left transmission case is attached to the right transmission case as described above, the left transmission case may be unable to be easily detached because the bearing concave portion of the left transmission case is fitted to the outer ring of the bearing fitted onto the left end of the driven shaft even if the bolt is unfastened when the left transmission case is detached because of maintenance and others.

That is, the left transmission case is moved leftward from the right transmission case and the bearing concave portion fitted to the outer ring of the bearing is required to be extracted, however, the outside face of the left transmission case is parallel in an extracted direction, force in the extracted direction cannot effectively affect, and work for detachment may be troublesome.

Accordingly, the present invention has been made in view of the foregoing, and an object of the present invention is to provide a scooter-type motorcycle wherein a secondary air control valve is disposed sufficiently close to an engine main body in order to address the above-mentioned problem.

In order to accomplish the above-mentioned object, the invention is described in Claim 1.
Fig. 1 is a left side view of a scooter-type motorcycle.
Fig. 2 is a perspective view of an engine with a cover removed as seen from the right oblique front.
Fig. 3 is a partial right side view of the engine with the cover mounted as seen from the direction of an arrow 3 in Fig. 2.
Fig. 4 is an enlarged sectional view taken along the line 4-4 of Fig. 3.
Fig. 5 is a substantial part enlarged view of Fig. 3, with the cover removed.
Fig. 6 is a view corresponding to Fig. 5, with an ignition coil removed.
Fig. 7 is a perspective view of a stay and a secondary air control valve as seen from a left anterior oblique lower portion.
Fig. 8 is a sectional view taken along the line 8-8 of Fig. 4.
Fig. 9 is a side view showing a power unit a part of which is omitted equivalent to one embodiment of the invention.
Fig. 10 is a sectional view showing the power unit.
Fig. 11 is a side view showing a transmission case cover.
Fig. 12 is a back view showing the transmission case cover.
Fig. 13 is a perspective view showing the rear of the power unit viewed from the diagonal upside.
Fig. 14 is a perspective view showing the rear of the power unit viewed from the diagonal downside.

The present invention will be described below with reference to an embodiment of the present invention shown in the accompanying drawings.

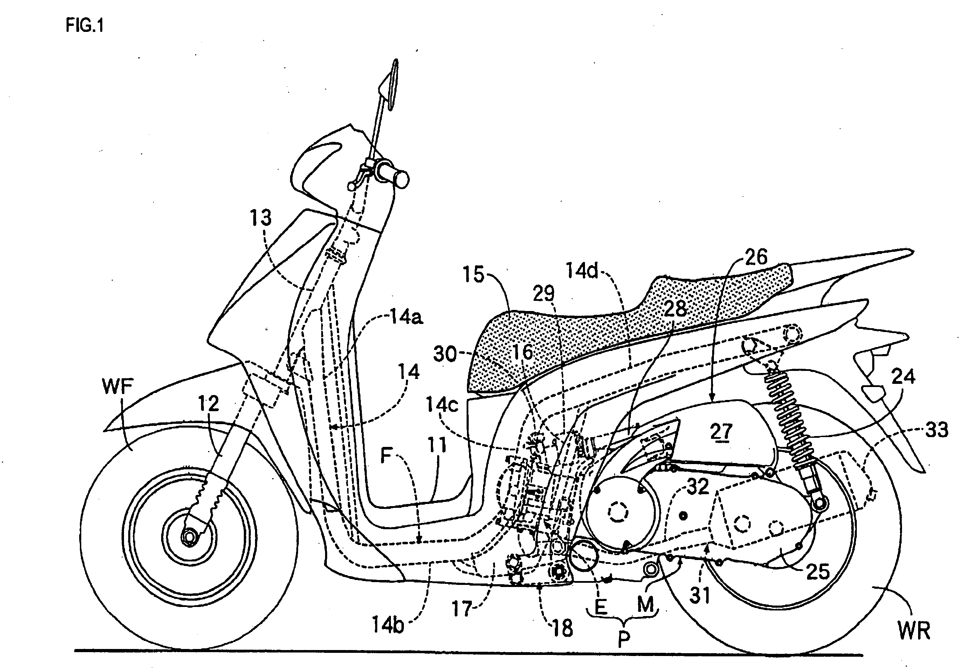

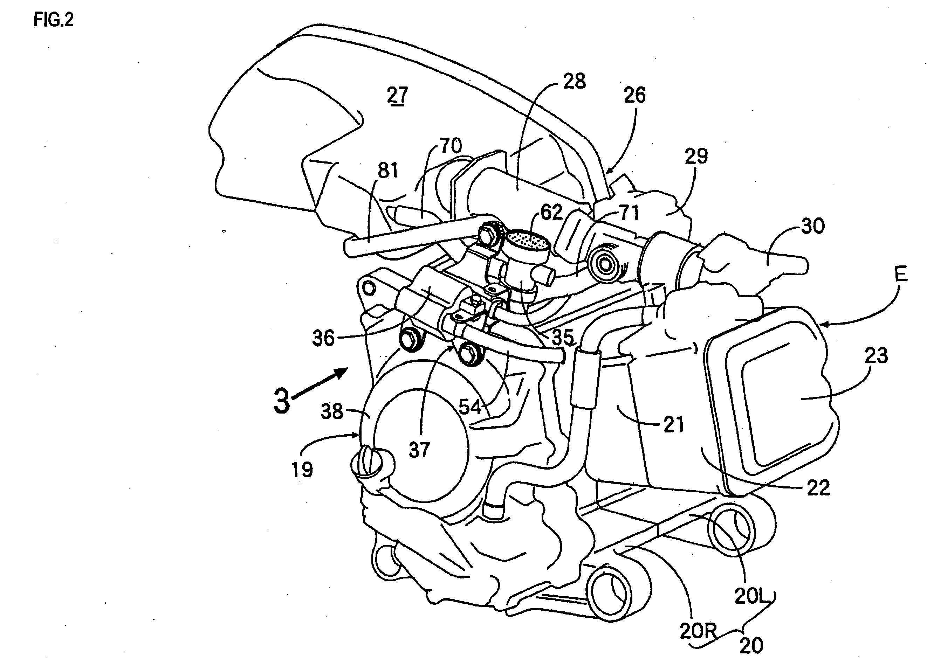

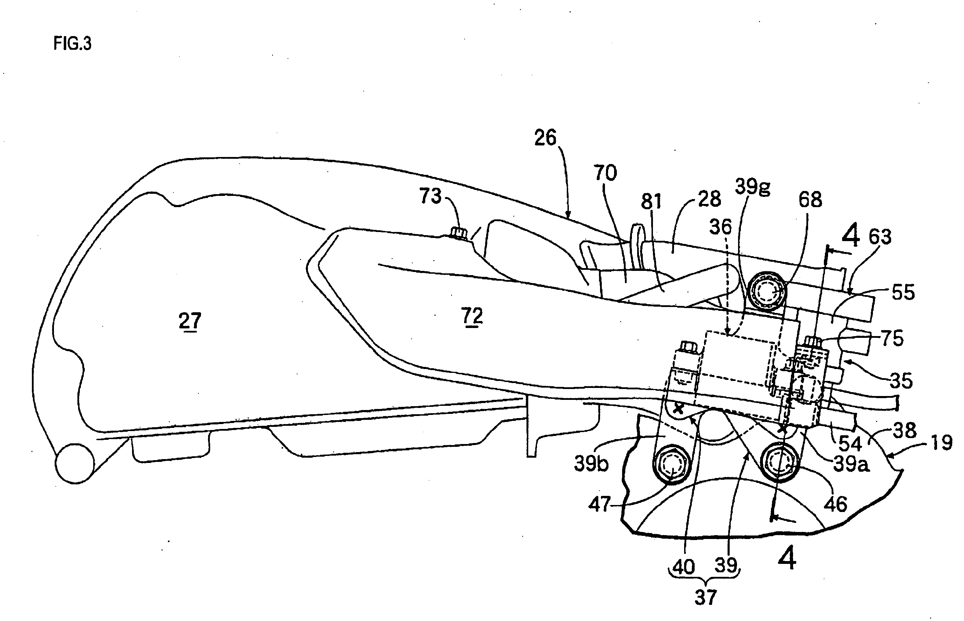

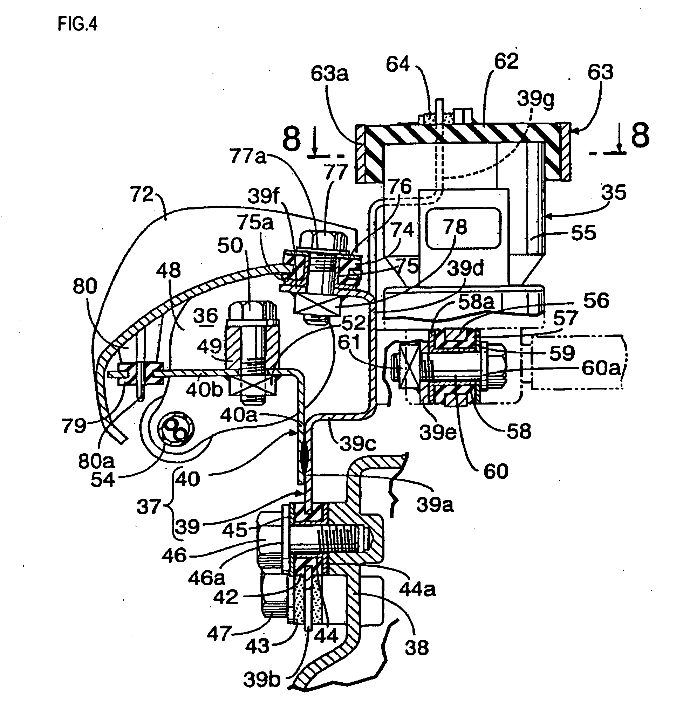

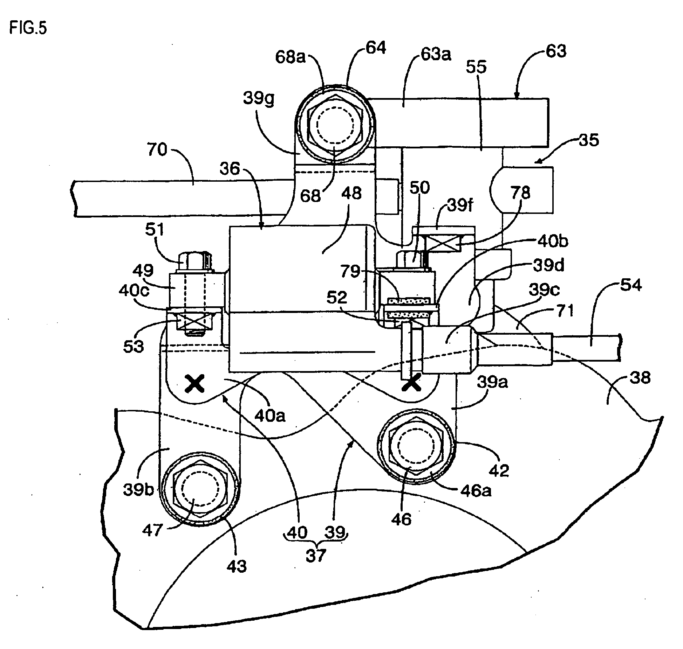

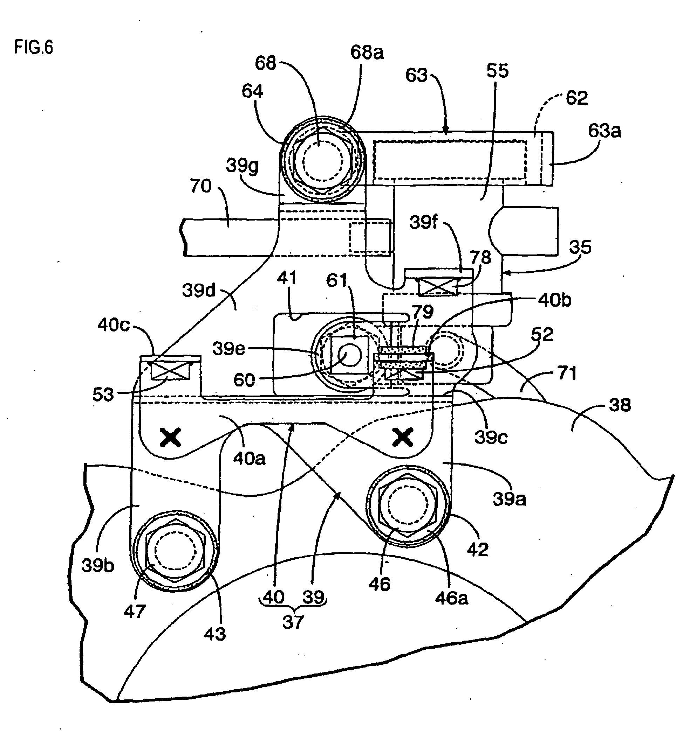

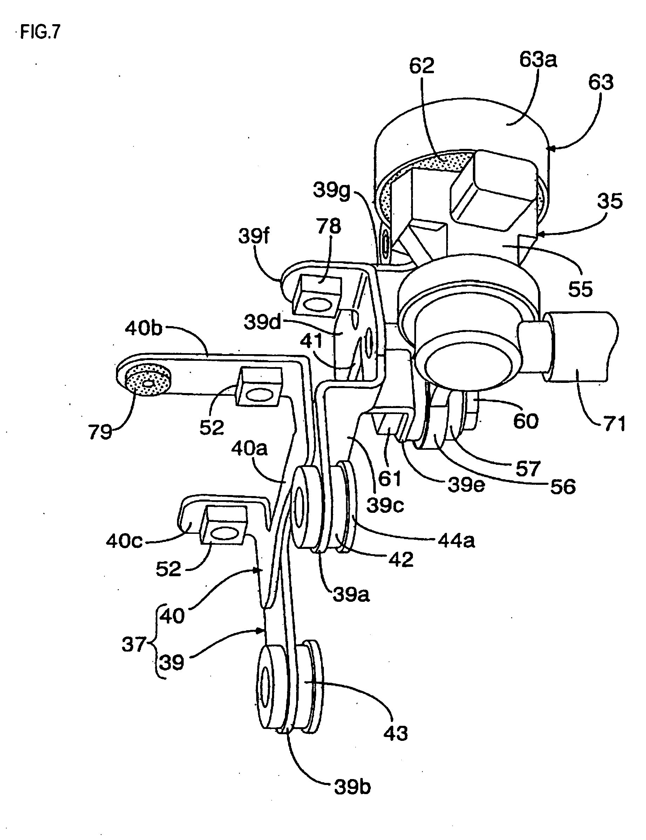

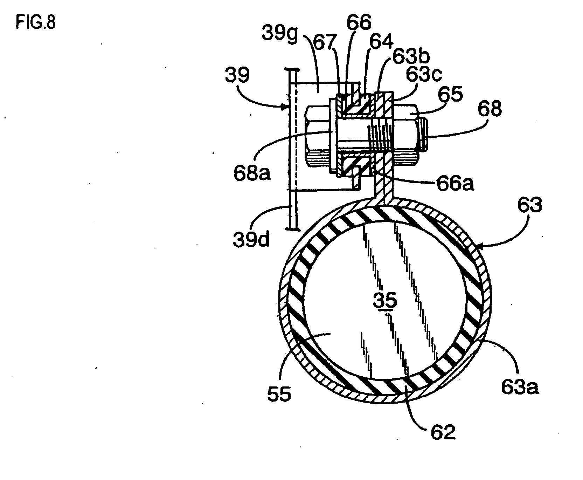

Figs. 1 to 8 illustrate said embodiment of the present invention. Fig. 1 is a left side view of a scooter-type motorcycle. Fig. 2 is a perspective view of an engine with a cover removed as seen from the right oblique front. Fig. 3 is a partial right side view of the engine with the cover mounted as seen from the direction of an arrow 3 in Fig. 2. Fig. 4 is an enlarged sectional view taken along the line 4-4 of Fig. 3. Fig. 5 is a substantial part enlarged view of Fig. 3, with the cover removed. Fig. 6 is a view corresponding to Fig. 5, with an ignition coil removed. Fig. 7 is a perspective view of a stay and a secondary air control valve as seen from a left anterior oblique lower portion. Fig. 8 is a sectional view taken along the line 8-8 of Fig. 4.

Referring now to Fig. 1, a body frame F of the scooter-type motorcycle having a low-floor type floor 11 is provided with a head pipe 13 for steerably supporting a front fork 12 for journaling a front wheel WF, and a pair of right and left side frames 14 with front end parts connected to the head pipe 13. Each of the side frames 14 integrally includes a down frame part 14a extending downwardly from the head pipe 13, a lower frame part 14b continuing to the lower end of the down frame part 14a, extending rearwardly below the floor 11, and formed so that a rear half part thereof is tilted rearwardly and upwardly, a rising frame part 14c continuing to the rear end of the lower frame part 14b and extending upwardly in the rear of the floor 11, and a seat rail part 14d extending rearwardly from the rear end of the rising frame part 14c to support a riding seat 15, and is formed by bending a single pipe.

Between the rear of the lower frame parts 14b of the side frames 14 and the front of the seat rail parts 14d thereof, rear sub-frames 16 are provided so as to be positioned below the lower frame parts 14b of the side frames 14 and in the rear of the rising frame parts 14c thereof. Pivot plates 17 are provided between both side frames 14 and both rear sub-frames 16.

On the pivot plates 17 of the body frame F, a power unit P composed of an engine E disposed in front of a rear wheel WR, and a transmission M disposed on the left side of the rear wheel WR is vertically swingable, and vertically swingably supported through a link mechanism 18. The rear wheel WR is journalled to a rear part of the power unit P. The transmission M is composed of a V-belt continuously variable transmission (not shown), and a reduction gear train (not shown) for decelerating output of the continuously variable transmission to transmit it to an axle of the rear wheel WR.

Referring to Fig. 2, an engine main body 19 of the engine E serving as a single cylinder, water-cooled four-cycle engine is provided with a crankcase 20 formed by joining together left and right crankcase halves 20L and 20R separated into left and right, a cylinder block 21 connected to the crankcase 20, a cylinder head 22 connected to the cylinder block 21, and a head cover 23 connected to the cylinder head 22. The transmission M is housed in a transmission case 25 (see Fig. 1) continuing to the crankcase 20 and extending to the left side of the rear wheel WR. Between a rear part of the left seat rail part 14d of the body frame F, and a rear part of the transmission case 25, a rear cushion unit 24 is provided.

An upper side face of the cylinder head 22 of the engine main body 19 is connected to a downstream end of intake passage forming means 26 with an upstream end connected to an air cleaner 27 that is disposed on an upper part of the transmission case 25 to be supported by the transmission case 25. The intake passage forming means 26 is provided with an inlet pipe 28 with an upstream end connected to the air cleaner 27, and a throttle body 29 provided between a downstream end of the inlet pipe 28 and the cylinder head 22. A fuel injection valve 30 for injecting fuel into air passing through the throttle body 29 is mounted on the cylinder head 22.

Referring back to Fig. 1, an exhaust system 31 connected to a lower side face of the cylinder head 22 is composed of an exhaust pipe 32 connected to a lower part of the cylinder head 22 and extending from a right lower part of the engine main body 19 to the right side of the rear wheel WR, and an exhaust muffler 33 connected to the exhaust pipe 32 and disposed on the right side of the rear wheel WR.

Referring together to Figs. 3 to 5, air purified by the air cleaner 27 is supplied to the exhaust system 31 of the engine E through a secondary air control valve 35. The secondary air control valve 35 and an ignition coil 36 are supported in common by a stay 37 elastically supported by the engine main body 19 or the body frame F. According to this embodiment, the secondary air control valve 35 and the ignition coil 36 are supported in common by the stay 37 elastically supported by a right cover 38 connected to a right side face of the crankcase 20 of the engine main body 19. The stay 37 is disposed in front of the air cleaner 27 and next to the inlet pipe 28, and is mounted on the engine main body 19 through mount rubbers 42 and 43 by bolts 46 and 47 inserted from a side of the engine main body 19.

Referring together to Figs. 6 and 7, the stay 37 is formed by first and second support plates 39 and 40 joined together by welding. The first support plate 39 integrally includes mounting leg parts 39a and 39b divided into the front and rear to vertically extend, a connecting plate part 39c continuing in common to upper ends of both the mounting leg parts 39a and 39b to be inwardly bent at a right angle, a rising plate part 39d extending upwardly from an inner end of the connecting plate part 39c, a lower support part 39e protruding inwardly from a lower part of the rising plate part 39d, an intermediate support part 39f protruding outwardly from a vertically intermediate part of the rising plate part 39e, and an upper support part 39g bent inwardly from an upper end of the rising plate part 39e, and is formed by bending a single steel plate.

The lower support part 39e is formed in an approximate L-shape in a horizontal plane in such a manner that a part of the lower part of the rising plate part 39d is inwardly cut to be raised. A rectangle opening 41 is formed on the lower part of the rising plate part 39d corresponding to the lower support part 39e. The intermediate support part 39f protrudes outwardly from the rising plate part 39d so as to form a right angle with the rising plate part 39d. The upper support part 39g is formed in an approximate L-shape in a vertical plane perpendicular to the rising plate part 39d, and extends upwardly from an upper end of the rising plate part 39d.

On the other hand, the second support plate 40 integrally includes a mounting plate part 40a on which both the mounting leg parts 39a and 39b of the first support plate 39 abut outwardly, welded to the mounting leg parts 39a and 39b, and a pair of support arm parts 40b and 40c bent at a right angle outwardly from front and rear parts of the upper end of the mounting plate part 40a to extend outward, and is formed by bending a single steel plate.

Both the mounting leg parts 39a and 39b of the stay 37 are mounted on the right cover 38 of the engine main body 19 through the mount rubbers 42 and 43. More specifically, a cylindrical collar 44, having a collar part 44a sandwiched between the right cover 38 and one end of the mount rubber 42 at one end thereof, is inserted into the mount rubber 42 mounted on the mounting leg part 39a, and a washer 45 abuts on the other end of the mount rubber 42. The bolt 46 inserted into the washer 45 and the collar 44 is threaded into the right cover 38, and is integrally provided with a flange part 46a sandwiching the washer 45 between the other end of the mount rubber 42 and the flange part 46a.

The mounting leg part 39b is mounted on the right cover 38 using the mount rubber 43 and the bolt 47 with the same structure as the mounting structure of the mounting leg part 39a on the right cover 38.

The ignition coil 36 is mounted on both the support arm parts 40b and 40c of the stay 37. Namely, a case 48 of the ignition coil 36 is disposed between the support arm parts 40b and 40c, and both ends of a core 49 protruding from both ends of the case 48 are fastened to the support arm parts 40b and 40c with bolts 50 and 51. Also, weld nuts 52 and 53 into which the bolts 50 and 51 are threaded, are fixedly secured to lower surfaces of the support arm parts 40b and 40c.

A high-tension cord 54 extending forwardly from the case 48 of the ignition coil 36 extends toward the engine main body 19 of the engine E.

A valve housing 55 of the secondary air control valve 35 is formed in a stepped cylindrical shape vertically extending. A support arm part 56 facing the lower support part 39e of the stay 37 from the inside is provided on a lower part of the valve housing 55, and is supported by the lower support part 39e through a mount rubber 57.

More specifically, a cylindrical collar 58, having a collar part 58a sandwiched between the lower support part 39e and one end of the mount rubber 57 at one end thereof, is inserted into the mount rubber 57 mounted on the support arm part 56, and a washer 59 abuts on the other end of the mount rubber 57. Also, a bolt 60 inserted into the washer 59 and the collar 58 is threaded into a weld nut 61, and is integrally provided with a flange part 60a sandwiching the washer 59 between the other end of the mount rubber 57 and the flange part 60a.

Referring to Fig. 8, on an upper part of the valve housing 55 of the secondary air control valve 35, a dish-shaped cap 62 made of elastic material such as rubber is mounted. A holding member 63 for holding the upper part of the valve housing 55 through the cap 62 is supported by the upper support part 39g through a mount rubber 64.

The holding member 63 is formed so as to integrally include a fastening part 63a formed in a circular arc shape so as to surround the outer periphery of the cap 62 over almost the whole circumference, and a pair of opposite plate parts 63b and 63c protruding outwardly from both ends of the fastening part 63a and facing each other. The fastening part 63a is brought into close contact with the outer periphery of the cap 62 by making both the opposite plate parts 63b and 63c close to each other, and thus, the upper part of the valve housing 55 is held by the holding member 63.

The holding member 63 is disposed so that the opposite plate part 63b of both the opposite plate part 63b and 63c faces the upper support part 39g. The mount rubber 64 is mounted on the upper support part 39g. A cylindrical collar 66, having a collar part 66a sandwiched between the opposite plate part 63b of the holding member 63 and one end of the mount rubber 64 at one end thereof, is inserted into the mount rubber 64, and a washer 67 abuts on the other end of the mount rubber 64. Also, a bolt 68 inserted into the washer 67, the collar 66, and both the opposite plate parts 63b and 63c is threaded into a nut 65, and is integrally provided with a flange part 68a sandwiching the washer 67 between the other end of the mount rubber 64 and the flange part 68a.

In this manner, the secondary air control valve 35 is elastically supported by the lower support part 39e and the upper support part 39g of the stay 37. The secondary air control valve 35 elastically supported by the stay 37 elastically supported by the right cover 38 of the engine main body 19, is disposed on a side of the intake passage forming means 26, in front of the air cleaner 27 and above the engine main body 19, with at least one part overlapped with the intake passage forming means 26 in side view. In this embodiment, the secondary air control valve 35 is disposed on a side in the vicinity of a connecting part of the inlet pipe 28 and the throttle body 29 of the intake passage forming means 26.

A downstream end of an upstream rubber hose 70 with an upstream end connected to the air cleaner 27 is connected to an upper part of the valve housing 55 of the secondary air control valve 35. A downstream rubber hose 71 connected to a lower part of the valve housing 55 extends toward the engine main body 19 to supply the secondary air to the exhaust system 31 of the engine E. A breather hose 81 for introducing blow-by gas from the engine main body 19 is connected to the air cleaner 27 over the upstream rubber hose 70.

As shown in Figs. 3 and 4, the ignition coil 36 supported by the stay 37, and the vicinity of a connecting part of the upstream rubber hose 70 to the air cleaner 27 are covered with a cover 72. A rear part of the cover 72 is fastened to the air cleaner 27 with a bolt 73 (see Fig. 3). The cover 72 is supported on the intermediate support part 39f of the stay 37 through a mount rubber 74.

More specifically, a cylindrical collar 75, having a collar part 75a sandwiched between the intermediate support part 39f and one end of the mount rubber 74 at one end thereof, is inserted into the mount rubber 74 mounted on the cover 72, and a washer 76 abuts on the other end of the mount rubber 74. Also, a bolt 77 inserted into the washer 76 and the collar 75 is threaded into a weld nut 78 fixedly secured to the intermediate support part 39f, and is integrally provided with a flange part 77a sandwiching the washer 76 between the other end of the mount rubber 74 and the flange part 77a.

On a tip end of the support arm part 40b of the stay 37, as shown in Figs. 4 and 7, a grommet 79 made of elastic material is mounted. As shown in Fig. 4, a pin 80a resiliently fitted in the grommet 79 is integrally provided in a protruding condition on a support boss 80 integrally provided on the cover 72 so as to abut on the grommet 79 from above. Namely, the cover 72 is removably mounted on the air cleaner 27 and the stay 37.

Then, the advantages of this embodiment will be described. The secondary air control valve 35 for controlling the quantity of the secondary air supplied from the air cleaner 27 to the exhaust system 31 of the engine E, is disposed on the side of the intake passage forming means 26 with the upstream end connected to the air cleaner 27 and the downstream end connected to the engine main body 19, in front of the air cleaner 27 and above the engine main body 19, with at least one part overlapped with the intake passage forming means 26 in side view. Therefore, the secondary air control valve 35 can be effectively disposed in the space of the side of the intake passage forming means 26 as close to the engine main body 19 as possible, thereby reducing the length of a secondary air supply passage from the secondary air control valve 35 to the exhaust system 31 of the engine E, and simplifying piping arrangement structure. Also, since the engine main body 19 is provided below the secondary air control valve 35, the secondary air control valve 35 can be effectively protected against splashes of mud or water during traveling of the scooter-type motorcycle.

Furthermore, the secondary air control valve 35 and the ignition coil 36 are supported in common by the stay 37 supported by the engine main body 19. Thus, the number of parts required for supporting the ignition coil 36 and the secondary air control valve 35 can be reduced, and the stay 37 can be mounted on the engine main body 19, with the ignition coil 36 and the secondary air control valve 35 supported by the stay 37, thereby simplifying assembling work. Also, since the stay 37 is elastically supported by the engine main body 19, the stay 37 mounted with the ignition coil 36 and the secondary air control valve 35 is relatively increased in weight, thereby reducing natural frequencies and enhancing vibration-proofing performance.

Moreover, the secondary air control valve 35 is elastically supported by the stay 37, and therefore is elastically supported by the engine main body 19 with double vibration-proofing structure, thereby more effectively suppressing the vibration transmitted to the secondary air control valve 35.

As another embodiment of the present invention, the stay 37 may be elastically supported by the body frame F. In that case, the secondary air control valve 35 is disposed on the side of the intake passage forming means 26, in front of the air cleaner 27 and above the engine main body 19, with at least one part overlapped with the intake passage forming means 26 in side view, thereby reducing a clearance, for allowing the swing motion of the power unit P, of piping for interconnecting the secondary air control valve 35 and the power unit P.

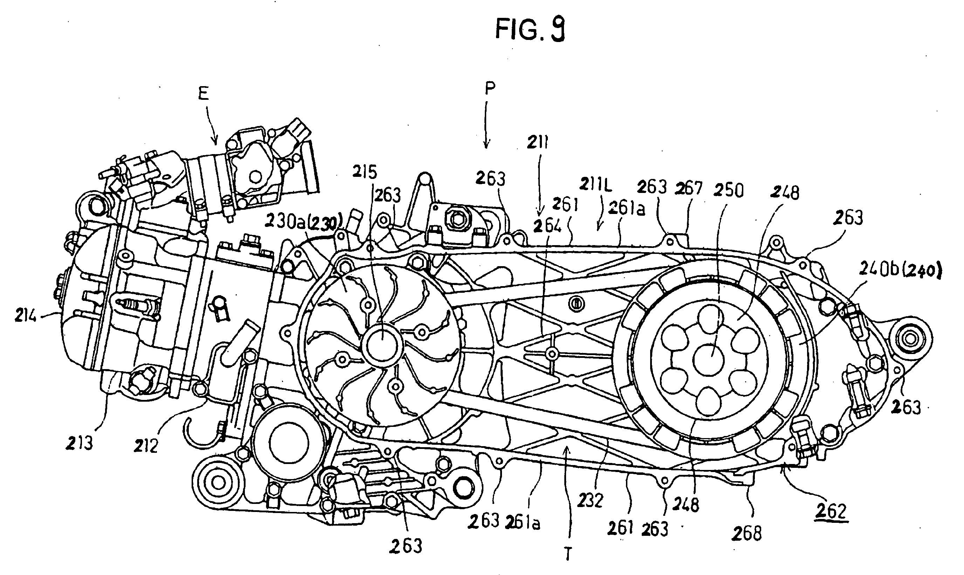

In addition to the above mentioned embodiment of the invention the transmission case of the power unit may also comprise the features as described below with reference to the following embodiment shown in Figs. 9 to 16.

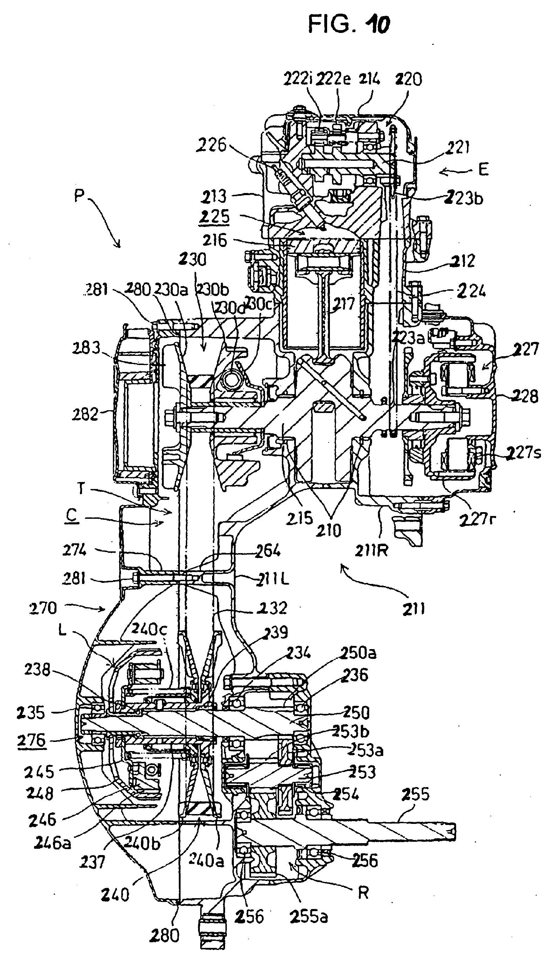

As shown in Figs. 9 and 10, the power unit P includes the internal combustion engine E arranged on the front side of the body, a belt continuously variable transmission T which is a transmission system, which is arranged on the left side of the internal combustion engine E with the transmission biased and which is extended backward and a speed reducing gear train R provided to the rear of the belt continuously variable transmission T.

A unit case 211 of the power unit P is divided laterally to be a left unit case 211L and a right unit case 211R, the reciprocation of a piston 216 slidably fitted into a cylinder bore 212a of a cylinder block 212 is transmitted to a crankshaft 215 rotatably supported by the unit case 211 with the crankshaft laid laterally via a connecting rod 217, and the crankshaft 215 is rotated.

The cylinder block 212 is inclined forward to be almost horizontal and is protruded forward from the unit case 211, a cylinder head 213 is put on the cylinder block 212, and a cylinder head cover 214 covers a valve train 220 provided to the cylinder head 213.
An intake rocker arm 222i and a rocker arm 222e are rockably touched to a camshaft 221 of the valve train 220, and an intake valve and an exhaust valve not shown are opened and closed by the intake rocker arm 222i and the rocker arm 222e.

The camshaft 221 is rotated at speed reducing ratio equivalent to 1/2 of the speed of the crankshaft 215 by a timing chain 224 wound between a driven sprocket 223b fitted to a right end of the camshaft 221 and a driving sprocket 223a fitted onto the crankshaft 215.
An ignition plug 226 is attached to the cylinder head 213 with its electrode exposed to a combustion chamber 225 partitioned by a ceiling surface to which a top face of the piston 216 is opposite.

The crankshaft 215 is rotatably journalled by the left unit case 211L and the right unit case 211R via main bearings 210, 210, an outer rotor 227r of an alternator 227 is fitted onto a right end protruded rightward from the right main bearing 210 of the crankshaft 215, the right side of the outer rotor is covered with an alternator cover 228 connected to the right unit case 211R, and an inner stator 227s of the alternator 227 is attached to the alternator cover 228.

The left unit case 211L is extended backward, is long longitudinally, and is open leftward.
A part open leftward of the left unit case 211L is covered with a transmission case cover 270 from the left side and a power transmission chamber C that houses the belt continuously variable transmission T inside is formed.

That is, the left unit case 211L and the transmission case cover 270 form a transmission case, a right transmission case acquired by dividing the transmission case sideways is the left unit case 211L, and a left transmission case is the transmission case cover 270.

A driving pulley 230 of the belt continuously variable transmission T is attached to a left end protruded leftward from the main bearing 210 provided to the left unit case 211L of the crankshaft 215.
The driving pulley 230 is provided with: a fixed pulley half 230a on the driving side fixed to the crankshaft 215 as a driving shaft in an axial direction and in a rotational direction of the crankshaft and having a conical surface to which a V-belt 232 is touched; a moving pulley half 230b on the driving side located on the right side of the fixed pulley half 230a on the driving side, connected to the crankshaft 215 movably in the axial direction of the crankshaft and unmovably in the rotational direction of the crankshaft and having a conical surface to which the V-belt 232 is touched; a ramp plate 230c fixed to the crankshaft 215 in the axial direction and in the rotational direction of the crankshaft; and plural weight rollers 230d arranged between the moving pulley half 230b on the driving side and the ramp plate 230c.

In the meantime, in the rear of the power transmission chamber C, a driven shaft 250 opposite to the driving shaft (the crankshaft 215) is rotatably journalled by the left unit case 211L, the transmission case cover 270 and a gear case cover 251 via each bearing 234, 235, 236.
A rotary sleeve 237 of rotating relatively is coaxially supported by the driven shaft 250 via bearings 238, 239 and a driven pulley 240 which forms a pair together with the driving pulley 230 is provided to the rotary sleeve 237.

The driven pulley 240 is integrated with: the rotary sleeve 237, and is provided with a fixed pulley half 240a on the driven side the movement in an axial direction of which is prohibited; a moving pulley half 240b on the driven side which can be moved in the axial direction on a periphery of the rotary sleeve 237 and which can be slightly moved in a rotational direction; and a cylindrical helical compression spring 240c that presses the moving pulley half 240b on the driven side toward the fixed pulley half 240a on the driven side.

The V-belt 232 is wound between the driving shaft and the driven shaft. Particularly, the V-belt 232 wound between the opposite conical surfaces of the fixed pulley half 230a on the driving side and the moving pulley half 230b on the driving side of the driving pulley 230 in the front is wound between opposite conical surfaces of the fixed pulley half 240a on the driven side and the moving pulley half 240b on the driven side of the driven pulley 240 in the rear.

As the belt continuously variable transmission T is configured as described above, the moving pulley half 230b on the driving side is off the fixed pulley half 230a on the driving side in the driving pulley 230 when the engine speed of the internal combustion engine E is small, a wound radius of the V-belt 232 is small, and in the driven pulley 240, as the moving pulley half 240b on the driven side pressed by the helical compression spring 240c is close to the fixed pulley half 240a on the driven side and a wound radius of the V-belt 232 is large, the power of the crankshaft 215 is transmitted to an output shaft at large gear ratio.

As plural weight rollers 230d are moved outside in a radial direction by centrifugal force in the driving pulley 230 and press the moving pulley half 230b on the driving side so that it is close to the fixed pulley half 230a on the driving side when the engine speed increases, the wound radius of the V-belt 232 increases, and in the driven pulley 240, as the moving pulley half 240b on the driven side is off the fixed pulley half 240a on the driven side against the resilient force of the helical compression spring 240c and the wound radius of the V-belt 232 decreases, gear ratio decreases.

A clutch outer 248 of a centrifugal clutch L is fitted onto the driven shaft 250 extended on the left side of a left end of the rotary sleeve 237 and a drive plate 245 is fitted to the left end of the rotary sleeve 237 inside the bowl-like clutch outer 248.

When the rotary sleeve 237 is revolved at larger revolution speed than predetermined revolution speed, plural clutch shoes 246 rockably supported by the drive plate 245 are rocked outside in a radial direction against the resilient force of a clutch spring 247 by centrifugal force, a friction member 246a provided to an outside face of each clutch shoe 246 is touched to an inside face of the clutch outer 248, the centrifugal clutch L is turned connected, and the revolution of the driven pulley 240 is transmitted to the driven shaft 250.

The gear case cover 251 covers the right side of the rear of the left unit case 211L, a speed reducing gear chamber 252 is formed, and the speed reducing gear train R is housed in the speed reducing gear chamber 252.
In the speed reducing gear chamber 252, a speed reducing gear shaft 253 is rotatably journalled via bearings 254, 254 in parallel with the driven shaft 250, further, a rear axle 255 is rotatably journalled via bearings 256, 256, a right half of the rear axle 255 is protruded outside through the gear case cover 251, and a rear wheel is supported by the right half.

A small-diameter gear 250a is formed on a part protruded into the speed reducing gear chamber 252 of the driven shaft 250, a large-diameter gear 253a integrated with the speed reducing gear shaft 253 is engaged with the small-diameter gear 250a, a small-diameter gear 253b integrated with the speed reducing gear shaft 253 is engaged with a large-diameter gear 255a fitted onto the rear axle 255.
Therefore, the revolution speed of the driven shaft 250 is reduced via the speed reducing gear train R, the revolution is transmitted to the rear axle 255, and the rear wheel is rotated.

As described above, the power of the crankshaft 215 of the belt continuously variable transmission T of the internal combustion engine E is input to the driving pulley 230 of the belt continuously variable transmission T, is automatically shifted at gear ratio according to the engine speed of the internal combustion engine E in the belt continuously variable transmission T, is transmitted to the driven pulley 240, and further, is transmitted to the driven shaft 250 via the centrifugal clutch L.
The revolution of the driven shaft 250 is transmitted to the rear axle 255 after the revolution speed is reduced by the speed reducing gear train R.

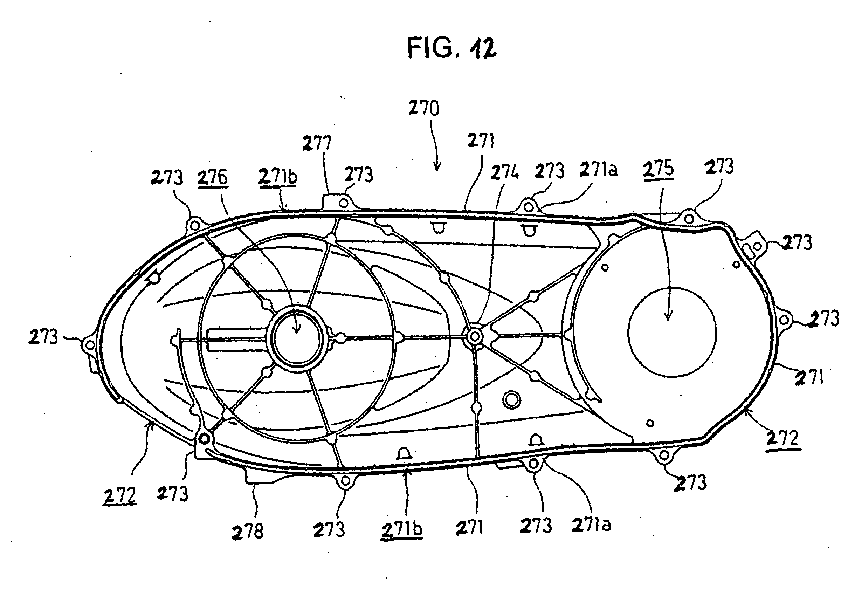

The transmission case cover 270 and the left unit case 211L respectively forming the power transmission chamber C that houses the belt continuously variable transmission T are equivalent to a left transmission case and a right transmission case respectively long longitudinally and divided sideways, and mutually joined faces 271a, 261a are annularly formed along elliptic peripheral edges 271, 261 located on the perpendicular same plane and long longitudinally (see Figs. 9 and 12).

That is, the power transmission mechanism is housed between a driving shaft 215 rotated by the power of the internal combustion engine E of the power unit P mounted in the vehicle and the driven shaft 250 interlocked with the rear wheel WR.

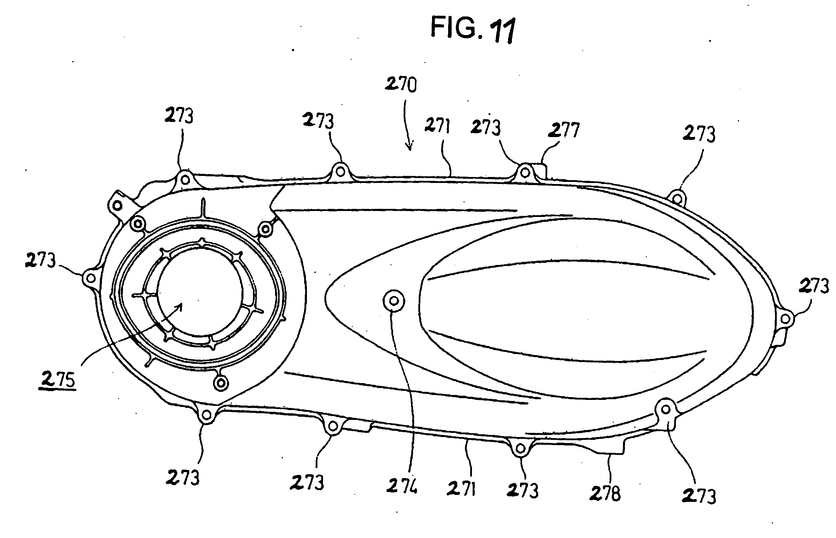

As shown in Figs. 11 and 12, in the transmission case cover 270, a cut-out opening 272 which is an exhaust port is formed in a rear lower part of the annular peripheral edge 271 forming the joined face 271a, and a groove 271b into which a sealing member 280 is fitted is formed on the joined face 271a except the cut-out opening 272 of the peripheral edge 271.

Plural fastening bosses 273 each of which has a hole for fastening a bolt are protruded along the joined face 271a at the peripheral edge 271 of the transmission case cover 270.
A fastening boss 274 is also protruded in the substantial center of the transmission case cover 270 up to the joined face 271a in the power transmission chamber C.

A circular opening 275 for a windbreak is formed in a part to which the crankshaft 215 is opposite on the front side of the transmission case cover 270 and a bearing concave portion 276 to which an outer ring of the bearing 235 is fitted is formed in a part to which the driven shaft 250 is opposite on the rear side.

The right and left transmission cases 211L, 270 are thus extended backward from the driving shaft 215 on the front side and journal the driven shaft 250 on the rear side.

Rectangular protruded pieces 277, 278 having the same plane as the joined face 271a along the joined face 271a are formed in substantially vertically symmetrical positions with the bearing concave portion 276 (or the driven shaft 250) at the peripheral edge 271 of the transmission case cover 270.
The upper protruded piece 277 is integrated with the fastening boss 273.

Hence, the transmission case is arranged on the outside of the body out of the right and left transmission cases 211L, 270 rotatably journals an end of the driven shaft 250 via the bearing 235 with the end of the driven shaft 250 fitted to the bearing concave portion 276.

As shown in Fig. 9, in the left unit case 211L to which the transmission case cover 270 is fitted, a cut-out opening 262 is formed corresponding to the cut-out opening 272 in a state in which the joined face 261a of the peripheral edge 261 is opposite to the joined face 271a.

A fastening boss 263 threaded inside is formed corresponding to each of the plural fastening bosses 273 of the transmission case cover 270 at the peripheral edge 261 of the left unit case 211L.
The fastening boss 263 has the same plane as the joined face 261a.
A fastening boss 264 is protruded from the substantial center of the left unit case 211L to the joined face 261a in the power transmission chamber C corresponding to the fastening boss 274 of the transmission case cover 270.

Rectangular protruded pieces 267, 268 are formed at the peripheral edge 261 of the left unit case 211L opposite to the protruded pieces 277, 278 of the transmission case cover 270.
The protruded pieces 267, 268 are located in substantially vertically symmetrical positions with the driven shaft 250 and are formed in the positions slightly off the joined face 261a rightward.

When the transmission case cover 270 is attached to the left unit case 211L described above, the joined face 271a on which the sealing member 280 is fitted into the groove 271b of the peripheral edge 271 of the transmission case cover 270 is touched to the joined face 261a of the peripheral edge 261 of the left unit case 211L, fitting the bearing concave portion 276 of the transmission case cover 270 to the outer ring of the bearing 235 the inner ring of which is fitted onto a left end of the driven shaft 250, a bolt 281 is inserted into each hole of the fastening bosses 263, 264 of the transmission case cover 270, is screwed to each female screw of the fastening bosses 273, 274 of the left unit case 211L, and is tightened.

That is, the mutually opposite protruded pieces 267, 268, 277, 278 are formed in substantially vertically symmetrical positions with the driven shaft 250 at right and left peripheral edges forming the mutually opposite joined faces 271a, 261a of the right and left transmission cases 211L, 270 in the right and left transmission cases 211L, 270.

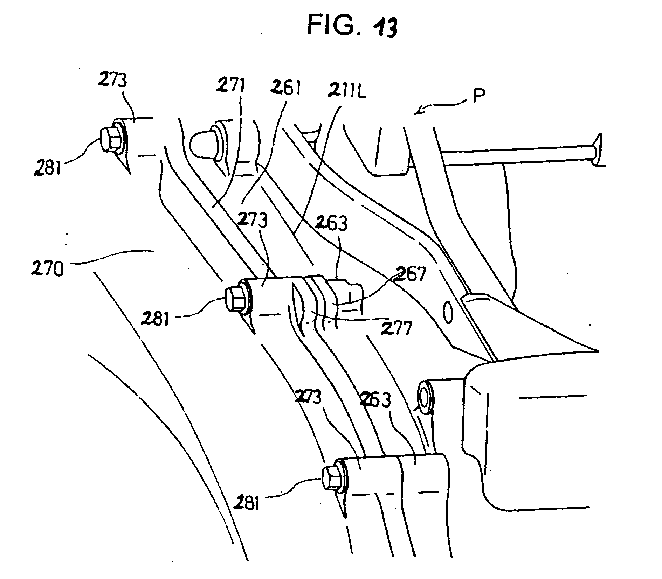

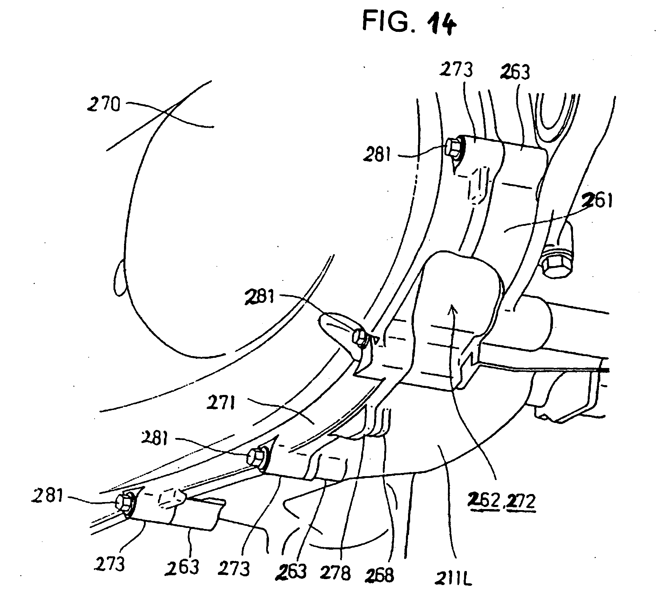

When the transmission case cover 270 is attached to the left unit case 211L as described above, each protruded piece 267, 268 of the left unit case 211L is opposite to each protruded piece 277, 278 on the side of the transmission case cover 270 via a gap as shown in Figs. 13 and 14.

A front L cover 282 is attached to the left side of the front of the transmission case cover 270 attached to the left unit case 211L and covers the circular opening 275 of the transmission case cover 270.
A fan 283 is formed on the left side of the fixed pulley half 230a on the driving side fitted onto the crankshaft 215, when the fixed pulley half 230a on the driving side is rotated together with the crankshaft 215, air is taken into the power transmission chamber C from the circular opening 275 by the rotation of the fan 283, the belt continuously variable transmission T is cooled, and the air is exhausted from the cut-out openings 262, 272 at the back.

When the transmission case cover 270 is detached from the left unit case 211L because of maintenance and others, the bolt 281 is first removed and the transmission case cover 270 has only to be pulled on the left side of the left unit case 211L, however, as the bearing concave portion 276 of the transmission case cover 270 is fitted to the outer ring of the bearing 235 provided to the left end of the driven shaft 250, it is not easy to detach the transmission case cover.

Then, in transmission case structure equivalent to this embodiment, the upside of the transmission case cover 270 can be easily moved leftward utilizing a principle of a lever by inserting an end of a tool an end of which is flat and sharp such as a minus screwdriver into the gap between the protruded piece 277 on the side of the transmission case cover 270 and the protruded piece 267 of the left unit case 211L respectively opposite on the upside of the driven shaft 250 and pushing the tool down with the base so that the gap is extended, and similarly, the downside of the transmission case cover 270 can be easily moved leftward by inserting the tool into the gap between the protruded piece 278 on the side of the transmission case cover 270 and the protruded piece 268 of the left unit case 211L respectively opposite on the downside of the driven shaft 250 and operating it so that the gap is extended.

That is, as the transmission case cover 270 can be moved leftward from the left unit case 211L in upper and lower positions of the transmission case cover 270 close to the bearing concave portion 276 fitted to the outer ring of the bearing 235, force effectively acts in a direction in which the bearing concave portion 276 fitted to the outer ring of the bearing 235 is extracted, the bearing concave portion 276 can be easily extracted, and when the bearing concave portion 276 is extracted, the transmission case cover 270 is detached.

That is to say that as the mutually opposite protruded pieces 267, 268, 277, 278 are formed in the substantially vertically symmetrical positions with the driven shaft 250 at the right and left peripheral edges forming the mutually opposite joined faces 271a, 261a of the right and left transmission cases 211L, 270 in each of the right and left transmission cases 211L, 270, force effectively acts in the direction where the bearing concave portion 276 fitted to the outer ring of the bearing 235 the inner ring of which is fitted onto the driven shaft 250 is extracted by inserting a tool between the mutually opposite protruded pieces 267, 268, 277, 278 and extending a gap between both protruded pieces, the bearing concave portion 276 can be easily extracted, one transmission case can be easily detached without damaging the outside faces of the transmission cases 211L, 270, and the transmission case structure is excellent in the workability of detachment.

As described above, the transmission case cover 270 can be easily detached from the left unit case 211L via the gap made between the mutually opposite protruded pieces 267, 268, 277, 278 without deforming or damaging the transmission case cover 270 as the tool can be easily inserted between the mutually opposite protruded pieces 267, 268, 277, 278 and this embodiment is thus excellent in the workability of detachment.

The protruded pieces 267, 268 of the left unit case 211L and the protruded pieces 277, 278 of the transmission case cover 270 can be also utilized for a presser piece for fixing the left unit case 211L and the transmission case cover 270 when the left unit case 211L and the transmission case cover 270 are worked.

In addition, as the transmission system is the belt continuously variable transmission in which an endless belt that is the power transmission mechanism is wound between the driving shaft and the driven shaft, the right and left transmission cases are extended backward from the driving shaft on the front side and journal the driven shaft on the rear side, the right and left transmission cases of the belt continuously variable transmission are made long longitudinally, the rigidity of the transmission case itself is decreased, force when one transmission case is detached is hardly transmitted to the bearing concave portion fitted to the outer ring of the bearing, however, as force acts so that the gap between both protruded pieces is extended by inserting a tool between the mutually opposite protruded pieces located close to the bearing and in the substantially vertically symmetrical positions with the driven shaft, force effectively acts in the direction in which the bearing concave portion fitted to the outer ring of the bearing is extracted, one transmission case can be easily detached without deforming the transmission case, and the workability of detachment can be maintained to be high.

According to the embodiment described in Figs. 9 to 14 a transmission case excellent in workability is provided where one of transmission cases divided sideways can be easily detached and work for detachment does not require much labor and much time of a power unit.

While the embodiments of the present invention have been described, the present invention is not limited to the above-described embodiments. Various design changes may be made without departing from the present invention described in the scope of claims.
19 ......... Engine main body
22 ......... Cylinder head
25 ......... Transmission case
26 ......... Intake passage forming means
27 ......... Air cleaner
31 ......... Exhaust system
35 ......... Secondary air control valve
36 ......... Ignition coil
37 ......... Stay
211 ........ Unit case,
211L ....... Left unit case,
211R ....... Right unit case,
215 ........ Crankshaft,
230 ........ Driving pulley,
232 ........ V-belt,
235 ........ Bearing,
240 ........ Driven pulley,
250 ........ Driven shaft,
255 ........ Rear axle,
261 ........ Peripheral edge,
261a ....... Joined face,
263, 264 ... Fastening boss,
267, 268 ... Protruded piece,
270 ........ Transmission case cover,
271 ........ Peripheral edge,
271a ....... Joined face,
271b ....... Groove,
273, 274 ... Fastening boss,
276 ........ Bearing concave portion,
277, 278 ... Protruded piece,
280 ........ Sealing member,
C .......... Power transmission chamber,
E .......... Internal combustion engine
F .......... Body frame
L .......... Centrifugal clutch,
M .......... Transmission
P .......... Power unit
R .......... Speed reducing gear train,
T .......... Belt continuously variable transmission,
WR ......... Rear wheel.

## Claims

1. A scooter-type motorcycle, comprising:
a power unit (P) composed of an engine (E) with a cylinder axis line of an engine main body (19) tilted forward and
a transmission (M) for transmitting an output of the engine (E) to a rear wheel (WR),
the engine (E), the transmission (M) and the rear wheel (WR) being swingably supported by a body frame (F),
the rear wheel (WR) is journaled to a rear part of a transmission case (25) continuing to the engine main body (19) and extending backward to a side of the rear wheel (WR) for housing the transmission (M), and
a downstream end of an intake passage forming means (26) with an upstream end connected to an air cleaner (27) disposed on an upper part of the transmission case (25) connected to an upper side face of a cylinder head (22) composing a part of the engine main body (19),
wherein a secondary air control valve (35) is controlling the quantity of secondary air supplied from the air cleaner (27) to an exhaust system (31) of the engine (E),
wherein said secondary air control valve (35) and an ignition coil (36) are supported in common by a stay (37),
the secondary air control valve (35) being elastically supported on the stay by a lower support part (39e) and an upper support part (39g) of the stay (37),
wherein said stay (37) is disposed in front of the air cleaner (27) and next to the inlet pipe (28) and is itself elastically supported by the engine main body (19),
wherein said secondary air control valve (35) is disposed on a side in the vicinity of a connecting part of the inlet pipe (28) and the trottle body (29) in the intake passage forming means (26).

2. The scooter-type motorcycle according to Claim 1, wherein the stay (37) is elastically supported by a side cover (38) connected to a side face of the crankcase (20) of the engine main body (19), and
the secondary air control valve (35) and the ignition coil (36) are disposed lower than an inlet pipe (28) with an upstream end connected to the air cleaner (27) in side view.

3. The scooter-type motorcycle according to Claim 1, wherein on an upper part of the valve housing (55) of the secondary air control valve (35), a dish-shaped cap (62) made of elastic material is mounted.

4. The scooter-type motorcycle according to Claim 1, wherein a holding member (63) for holding the upper part of the valve housing (55) through the cap (62) is supported by the upper support part (39g) through a mount rubber (64).

5. The scooter-type motorcycle according to Claim 1, wherein the holding member (63) is formed so as to integrally include a fastening part (63a) formed in a circular arc shape so as to surround the outer periphery of the cap (62) over almost the whole circumference.

## Patentansprüche

1. Motorrad des Rollertyps, umfassend:
eine Antriebseinheit (P), welche aus einem Motor (E) aufgebaut ist, wobei eine Zylinderachsenlinie eines Motorhauptkörpers (19) nach vorne geneigt ist; und
ein Getriebe (M) zum Übertragen einer Ausgabe des Motors (E) an ein Hinterrad (WR), wobei der Motor (E), das Getriebe (M) und das Hinterrad (WR) schwingbar durch einen Karosserierahmen (F) gelagert sind,
wobei das Hinterrad (WR) an einem hinteren Teil eines Getriebegehäuses (25), welches sich zu dem Motorhauptkörper (19) fortsetzt und sich nach hinten zu einer Seite des Hinterrads (WR) zum Aufnehmen des Getriebes (M) erstreckt, gelagert ist, und
ein stromabwärtiges Ende einer einlassdurchgangsbildenden Einrichtung (26), wobei ein stromaufwärtiges Ende mit einem Luftreiniger (27) verbunden ist, welcher auf einem oberen Teil des Getriebegehäuses (25) angeordnet ist, welches mit einer oberen Seitenfläche eines Zylinderkopfes (22) verbunden ist, welcher einen Teil des Motorhauptkörpers (19) aufbaut,
wobei ein sekundäres Luftsteuerventil (35) die Menge von sekundärer Luft steuert, welche von dem Luftreiniger (27) zu einem Abgassystem (31) des Motors (E) zugeführt wird,
wobei das sekundäre Luftsteuerventil (35) und eine Zündspule (36) gemeinsam durch eine Strebe (37) gelagert sind,
wobei das sekundäre Luftsteuerventil (35) elastisch auf der Strebe durch ein unteres Trägerteil (39e) und ein oberes Trägerteil (39g) der Strebe (37) gelagert wird,
wobei die Strebe (37) vor dem Luftreiniger (27) und neben dem Einlassrohr (28) angeordnet ist, und selbst elastisch durch den Motorhauptkörper (19) gelagert ist,
wobei das sekundäre Luftsteuerventil (35) auf einer Seite in der Nähe eines Verbindungsteils des Einlassrohrs (28) und des Drosselkörpers (29) in der einlassdurchgangsbildenden Einrichtung (26) angeordnet ist.

2. Motorrad des Rollertyps gemäß Anspruch 1, wobei die Strebe (37) elastisch durch eine Seitenabdeckung (38) gelagert ist, welche mit einer Seitenfläche des Kurbelgehäuses (20) des Motorhauptkörpers (19) verbunden ist, und
wobei das sekundäre Luftsteuerventil (35) und die Zündspule (36) tiefer als ein Einlassrohr (28) angeordnet sind, wobei ein stromaufwärtiges Ende mit dem Luftreiniger (27) in Seitenansicht verbunden ist.

3. Motorrad des Rollertyps gemäß Anspruch 1, wobei auf einem oberen Teil des Ventilgehäuses (55) des sekundären Luftsteuerventils (35) eine schalenförmig geformte Kappe (62) montiert ist, welche aus einem elastischen Material hergestellt ist.

4. Motorrad des Rollertyps gemäß Anspruch 1, wobei ein Halteelement (63) zum Halten des oberen Teils des Ventilgehäuses (55) durch die Kappe (62) durch das obere Trägerteil (39g) durch einen Montagegummi (64) gelagert ist.

5. Motorrad des Rollertyps gemäß Anspruch 1, wobei das Halteelement (63) gebildet ist, um integral ein Befestigungsteil (63a) zu enthalten, welches in einer kreisförmigen Bogenform gebildet ist, um so die äußere Peripherie der Kappe (62) über fast den gesamten Umfang zu umgeben.

## Revendications

1. Motocycle de type scooter, comprenant :
un bloc-moteur (P) composé d'un moteur (E) avec une ligne d'axe de cylindre d'un corps principal du moteur (19) inclinée vers l'avant et
une transmission (M) pour transmettre la puissance du moteur (E) à une roue arrière (WR), le moteur (E), la transmission (M) et la roue arrière (WR) étant supportés de façon oscillante par un châssis (F),
la roue arrière (WR) est tourillonnée à une partie arrière d'un carter de transmission (25) qui se poursuit jusqu'au corps principal du moteur (19) et s'étend vers l'arrière jusqu'à un côté de la roue arrière (WR) pour loger la transmission (M), et
une extrémité en aval d'un moyen formant passage d'admission (26) avec une extrémité amont raccordée à un filtre à air (27) disposé sur une partie supérieure du carter de transmission (25) raccordé à une face latérale supérieure d'une tête de cylindre (22) formant une partie du corps principal du moteur (19),
dans lequel une vanne de régulation d'air secondaire (35) régule la quantité d'air secondaire fournie par le filtre à air (27) à un système d'échappement (31) du moteur (E),
dans lequel ladite vanne de régulation d'air secondaire (35) et une bobine d'allumage (36) sont supportées en commun par un étai (37),
la vanne de régulation d'air secondaire (35) étant supportée de façon élastique sur l'étai par une partie support inférieure (39e) et une partie support supérieure (39g) de l'étai (37),
dans lequel ledit étai (37) est disposé devant le filtre à air (27) et près du tuyau d'arrivée (28) et est lui-même supporté de façon élastique par le corps principal du moteur (19),
dans lequel ladite vanne de régulation d'air secondaire (35) est disposée sur un côté dans le voisinage d'une partie de raccord du tuyau d'arrivée (28) et du corps de l'étrangleur (29) dans le moyen formant passage d'arrivée (26).

2. Motocycle de type scooter selon la revendication 1, dans laquelle l'étai (37) est supporté de façon élastique par un couvercle latéral (38) raccordé à une face latérale du carter (20) du corps principal du moteur (19) et
la vanne de régulation d'air secondaire (35) et la bobine d'allumage (36) sont disposées en dessous d'un tuyau d'arrivée (28) avec une extrémité amont raccordée au filtre à air (27) en vue latérale.

3. Motocycle de type scooter selon la revendication 1, dans laquelle, sur une partie supérieure du logement de vanne (55) de la vanne de régulation d'air secondaire (35), un couvercle de forme ronde (62) fait de matériau élastique est monté.

4. Motocycle de type scooter selon la revendication 1, dans laquelle un élément de soutien (63) pour soutenir la partie supérieure du logement de vanne (55) à travers le couvercle (62) est supporté par la partie support supérieure (39g) à travers un joint en caoutchouc (64).

5. Motocycle de type scooter selon la revendication 1, dans laquelle l'élément de soutien (63) est formé de façon à inclure de façon intégrée une pièce d'attache (63a) formée en une forme d'arc circulaire de façon à entourer la périphérie externe du couvercle (62) sur la quasi-totalité de la circonférence.
